# EUROPEAN PATENT SPECIFICATION

(11) **EP 2 969 256 B1**
(45) Date of publication and mention of the grant of the patent: **26.10.2016**
(21) Application number: 14721131.2
(22) Date of filing: 14.03.2014
(51) Int. Cl.: B05D 5/08, C09D 5/00, C09D 201/00, C09D 1/00, C09D 7/12, F16J 1/01

(54) **WEARABLE ANTI-FRICTION COATING FOR PISTON ASSEMBLY**
ABRIEBFESTE BESCHICHTUNG FÜR KOLBENANORDNUNG
REVÊTEMENT ANTIFRICTION D'USURE POUR ENSEMBLE PISTON

(30) Priority: 15.03.2013 US 201361794459 P
(43) Date of publication of application: 20.01.2016
(73) Proprietor: Mahle International GmbH, 70376 Stuttgart (DE); Heckman, William, Muskegon, MI 49444 (US)
(72) Inventor: HECKMAN, William, Muskegon, MI 49444 (US); ROSE, Reinhard, 70736 Stuttgart (DE); WEISSE, Volker, 70376 Stuttgart (DE); CEDRIC, Dobua, D-70176 Stuttgart (DE); KARA, Zeynep, 70378 Stuttgart (DE)
(74) Representative: BRP Renaud & Partner mbB Rechtsanwälte Patentanwälte Steuerberater
(86) International application number: PCT/US2014/029104
(87) International publication number: WO 2014/144619

(56) References cited:
- EP-A1- 1 548 265
- CN-A- 102 485 340
- GB-A- 2 353 739
- JP-A- S56 147 962

## Description

### FIELD OF THE INVENTION

Some embodiments relate to the application of anti-friction resistance coatings in mechanical systems and apparatus.

### BACKGROUND

It is known that moving parts in mechanical systems can be subjected to frictional forces. As an example, during normal operation, the pistons in internal combustion engines are subjected to frictional forces. The face of the piston is often in direct contact with a cylinder wall of a bore receiving the piston. During normal engine operation, the piston movement within the bore occasionally removes the lubricating film from the cylinder wall. The removal of the lubricating oil film results in detrimental metal to metal contact and accelerated wear.

As internal combustion engines achieve increasingly higher performance, higher power, and higher operating stresses, the piston must have excellent wear and scuff resistance. A commonly known problem with many pistons and their components is that they are not sufficiently resistant to wear. Outer surfaces of mechanical parts, including pistons of internal combustions engines, are often coated to improve performance characteristics of the parts, e.g., by altering frictional properties or wear characteristics of the surfaces. Increased wear resistance has been achieved by coating the various piston components with a material known to possess improved wear resistance.

However, many current processes for applying these coatings are expensive, consume large amounts of energy, and/or generate significant waste. For at least these reasons, an unmet need remains for improved systems, methods, compositions, and apparatus for creating wear-resistant articles that are more economical and energy-efficient, have shorter cycle time, and are less wasteful.

From GB 2 353 739 A a method for applying a low friction and low wear coating is known which has a resin matrix to a surface, e.g. an aluminum alloy piston. The method comprises formulation a spreadable mixture of matrix-forming resin, photoinitiator and solid lubricant.

From CN 102 485 340 A a method for the surface treatment of the piston engine is known, which comprises the steps of: cleaning the surface; cover the surface with fine metal mesh; coating a lubricating layer coating polymer topcoat fixation film; curing the lubricant layer; and testing the adhesion of the coating.

From JP S56 147962 A it is known to coat or paint a piston with mixed material which is prepared by mixing thermosetting resin and solid lubricant with PFA which has nonadhesiveness, wear resistance, thermal durability, slip performance, and workability.

From EP 1 548 265 A1 a piston ring for internal combustion engines is known which has a coating film comprising a heat-resistant material and a solid lubricant dispersed therein.

### BRIEF DESCRIPTION OF THE DRAWINGS

The various features of the exemplary embodiments illustrated and described with reference to any one of the figures may be combined with features illustrated in one or more other figures, as an appropriate artisan will understand. Alternative approaches that may not be explicitly illustrated or described may be able to be produced. The combinations of features illustrated provide representative illustrations for one or more possible applications. However, various combinations and modifications of the features consistent with the teachings of the present disclosure may be desired for particular uses or implementations.
Fig. 1 comprises an exemplary illustration of a piston assembly.
Fig. 2 comprises an exemplary illustration of a spray application of an anti-friction coating to a piston assembly.
Fig. 3 comprises an exemplary illustration of a silk screening application of an anti-friction coating to a piston assembly.
Fig. 4 comprises an exemplary illustration of an infra-red radiation curing of the anti-friction coating on a piston assembly.
Fig. 5 comprises an exemplary illustration of an ultra-violet radiation curing of the anti-friction coating on a piston assembly.
Fig. 6 comprises an exemplary illustration of an induction curing of the anti-friction coating on a piston assembly.

### DETAILED DESCRIPTION

Illustrative examples are shown in the appended drawings. Although the drawings represent the exemplary illustrations described herein, the drawings are not necessarily to scale and certain features may be exaggerated to better illustrate and explain an innovative aspect of an exemplary illustration. Further, the exemplary illustrations described herein are not intended to be exhaustive or otherwise limiting or restricting to the precise form and configuration shown in the drawings and disclosed in the following detailed description.

Reference in the specification to "an exemplary illustration", an "example" or similar language means that a particular feature, structure, or characteristic described in connection with the exemplary approach is included in at least one illustration. The appearances of the phrase "in an illustration" or similar type language in various places in the specification are not necessarily all referring to the same illustration or example.

Exemplary illustrations are provided herein of a method of applying an anti-friction coating on a surface, where the coating is produced by applying an anti-friction coating material to the surface and curing the material by applying localized curing energy such as infra-red radiation, ultra-violet radiation, or induction radiation. In some approaches, the coating is applied before curing via a spray application or a silkscreen method. The coating is useful for producing high wear-resistant properties on the contacting friction surfaces of machined component parts including pistons and related components, piston connecting rods, cylinder liners, and other direct contact, wear prone surfaces.

The present invention is defined in claim 1 and dependent claims 2 to 12.

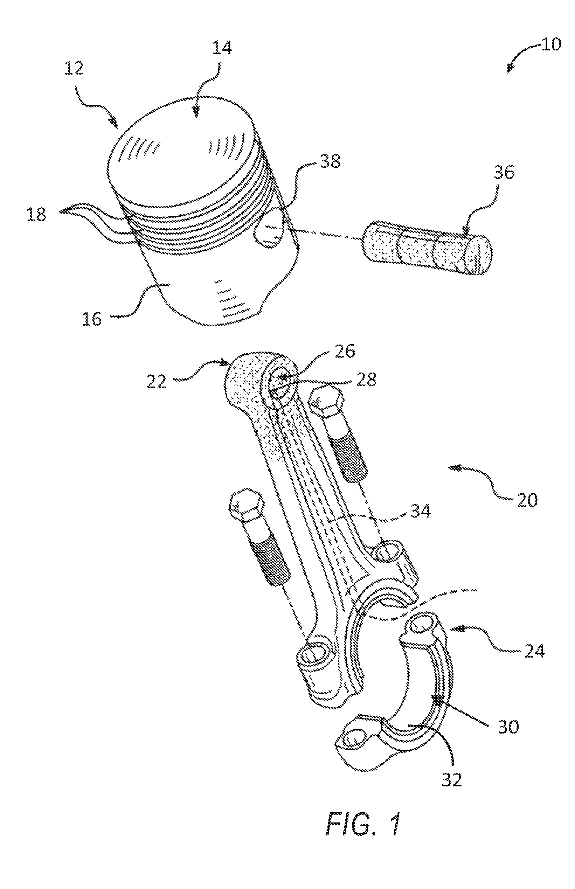

Referring now to Figure 1, which is an exemplary illustration of a part assembly 10 depicted as a piston assembly. The piston assembly 10 may include a piston 12 having a piston crown 14, or "land," and a piston skirt 16. The piston crown 14 may include a plurality of piston grooves 18 formed about its outer peripheral surface configured to receive corresponding piston rings and thereby to seal against a cylinder wall of an engine bore. The piston skirt 16 is generally configured to support the piston crown 14 during engine operation by interfacing with corresponding surfaces of the cylinder wall to stabilize the piston during reciprocal motion within the bore.

An exemplary connecting rod 20 may include a piston pin end or small end 22 and a crankshaft end or large end 24. The piston pin end 22 may include a piston pin bore 26 that defines a piston pin bore surface 28. The crankshaft end may 24 include a crankshaft pin bore 30 that defines a crankshaft bore surface 32. The connecting rod may be further defined by a beam 34 extending between the piston pin end and the crankshaft end.

The connecting rod may be rotationally coupled to the piston to form a piston and connecting rod assembly. The connecting rod may be coupled to the piston by way of a piston pin 36. The piston pin 36 may be inserted through the piston pin bosses 38 and received in the piston pin end 22 of the connecting rod thereby generally securing the connecting rod 20 to the piston 23

In an internal combustion engine, the connecting rods may transmit combustion power from the piston to the crankshaft of the engine, thereby converting the linear motion of the piston 3 to rotational motion at the crankshaft. Combustion power is generated from the intermittent ignition of combustible fuel such as gasoline that is injected into the combustion chamber, which creates extreme pressures that are applied to the piston and the connecting rod.

In modern internal combustion engines, the piston is both thermally and mechanically loaded to a particular extent. This also applies to the piston skirt 16 and the running surfaces thereof, in particular during interaction between the piston running surface and a cylinder wall running surface. This results in fatigue of the running surfaces. In order to counteract this fatigue, it is known to provide the running surfaces with a coating that is intended to withstand the mechanical and thermal loads and improve the friction behavior of the piston with respect to the cylinder wall running surface.

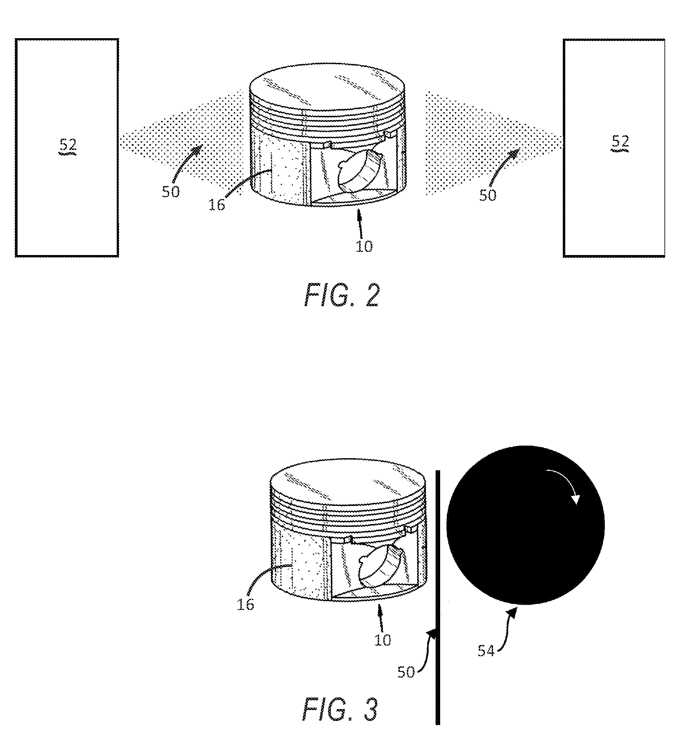

Referring now to Figure 2, which is an exemplary illustration of one method of applying an anti-friction coating. In one exemplary approach, it is contemplated than the anti-friction coating 50 is applied to at least a portion of the surface area of the part 10 or piston assembly. The anti-friction coating 50 is illustrated applied utilizing a controlled spray technique. In this exemplary embodiment, a spray assembly 52 is utilized to direct the anti-friction coating 50 onto the piston skirt 16. In other exemplary approaches, it is contemplated that the anti-friction coating 50 may be applied utilizing a silk screening process shown in Figure 3. In this exemplary illustration, the anti-friction coating 50 is applied to the piston skirt 16 using a silk screening assembly 54.

It is contemplated that in one illustrative example, the anti-friction coating 50 may comprise a binder matrix and a solid lubricant. Examples of useful binder systems include polymers from the families polyamide-imide ("PAI"), polyetheretherketone ("PEEK"), polyetherketone ("PEK"), polyetherketoneketone ("PEKK"), polyaryletherketone ("PAEK"), and/or epoxy resins of different chemical formula, and/or any combinations of such materials. The solid lubricants may include examples such as hexagonal boron nitride ("hBN"), graphite, molybdenum disulfide (MoS₂), tungsten disulfide (WS₂), zinc sulfide (ZnS), PTFE.

In addition to a binder matrix and solid lubricant, the anti-friction coating 50 may also include hard particles as compared to the hardness of the binder matrix and solid lubricant to improve wear resistance. Some examples may include tungsten carbide (WC), silicon carbide (SiC), silicon nitride (Si3N4), boron carbide (B₄C), cubic boron nitride (cBN), aluminum oxide

(Al₂O₃), titanium dioxide (TiO₂), titanium nitride (TiN). Materials such as short carbon fibers may also be used in some embodiments. Additionally, reactive contributors, as only one example, zinc phosphate, may improve the sliding properties of such systems. Under certain conditions the reactive contributor can react on a chemical basis with a counterpart contributor to form a sliding component. For example, zinc phosphate can react with stearic acid (if present in the oil) to form zinc stearate.

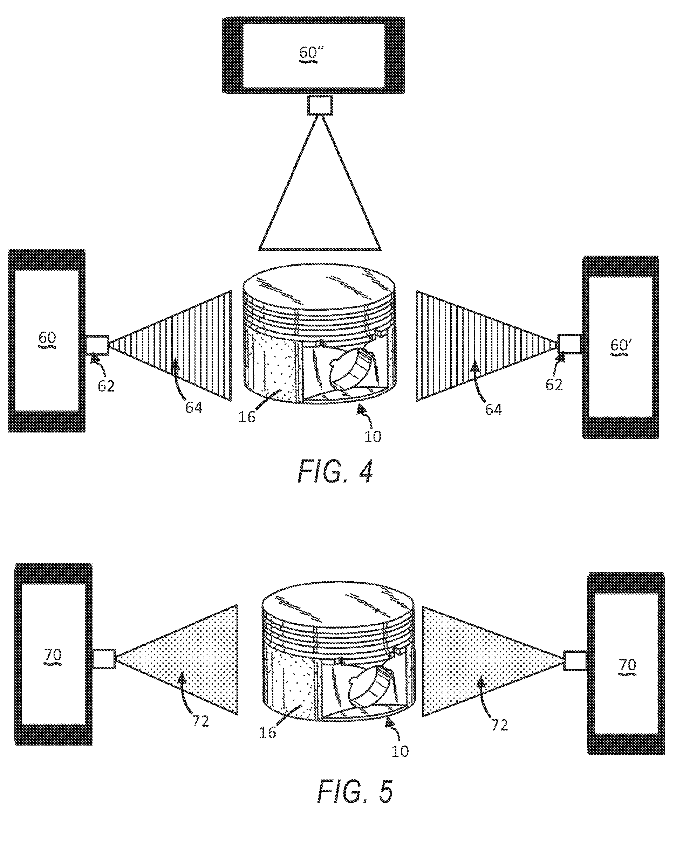

In an exemplary approach, the anti-friction coating 50 is subjected to localized curing energy as is illustrated in Figure 4. Figure 4 illustrates the use of an infra-red radiation generator 60 utilizing a corresponding focus lens assembly 62 to direct infra-red radiation 64 to only a localized region of the piston 10. In the exemplary illustration, this localized region is the piston skirt 16. The infra-red radiation 64 generates regional curing thermal energy where it impacts the piston skirt 16 rather than heating the entire part. This allows a quicker and more precise control of the curing process. In one illustrative example the infra-red radiation 64 may be delivered in the form of a focused beam. In other approaches, it is contemplated that an infra-red laser may be utilized for even more precise control.

It is contemplated that one or more infra-red radiation generating components 60 may be utilized in combination (e.g., three such components illustrated as elements 60, 60', and 60"). Each of these plurality of infra-red radiation generating components 60, 60', 60" may be selectively engaged such that varied portions of the part 10 may be cured in different fashions. This allows for the anti-friction coating to be cured in only selective areas, or to have varied curing properties across the exterior surface of the part 10. It is further contemplated that the anti-friction coating 50 may include metallic pigments or other particles that react to the infra-red radiation 64 in order to generate the regional curing thermal energy. The metallic pigments may include aluminum, copper, nickel, silver, stainless steel or any other flat shaped metallic alloys.

Although a single infra-red exposure may be sufficient to quickly cure the anti-friction coating 50, at least one exemplary embodiment contemplates the use of a plurality of different temperature/time ramps. It is contemplated that at least two temperature-steps are utilized such as a first step of 2 minutes at 100°C and a second step of 3 minutes at 230°C. This allows curing to be accomplished in considerably quicker times than conventional curing (hot air convection). In addition, since the exemplary illustration only generates regional curing thermal energy, as opposed to heating the entire part, curing may be more precisely controlled and more efficient.

In a similar fashion, it is contemplated that the infra-red radiation 64 may be substituted with other forms of curing radiation such as ultra-violet radiation as illustrated in Figure 5.

Figure 5 illustrates an exemplary embodiment wherein an ultra-violet radiation generating component 70 focuses the ultra-violet 72 radiation on only a localized region of the piston 10 such as the skirt 16.

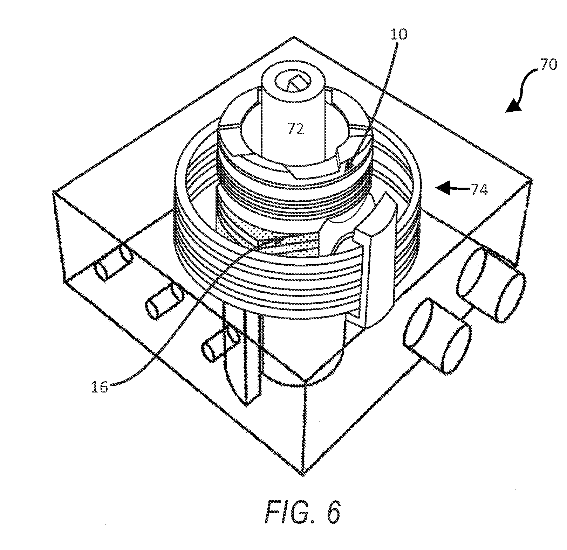

Additionally, another example contemplates the use of induction radiation to facilitate the generation of localized curing thermal energy as illustrated in Figure 6. The induction assembly 70 includes an inner induction coil 72 and an outer induction coil 74. The piston 10 is arranged within the induction assembly 70 such that the localized regions where curing is desired are positioned between the inner induction coil 72 and the outer induction coil 74. In this fashion, localized regions may generate curing thermal energy without heating the entire part.

In an exemplary illustration, the individual curing methodologies described may be utilized in various combinations to generate unique curing profiles as well as simultaneously cure an anti-friction coating 50 with varied compositions in different locations of the piston 10. Therefore, the piston assembly 10 may be first subjected to curing via one type of curing energy (e.g., infra-red, ultra-violet or induction radiation) and then subsequently subjected to another of the curing techniques (e.g., a different form or application of radiation) or even conventional hot air curing. This allows a tailored curing profile to be performed on each localized region of the piston 10. A piston 10 treated in this fashion could have a different custom anti-friction coating 50 on each surface area that was particularly suited for that regions operational exposure.

Finally, the anti-friction coating 50 may be comprised of a variety of compositions and applied in different ranges of thicknesses. In several illustrations presented solely by way of example, it is contemplated the anti-friction coating 50 may comprise a coating layer having a thickness of approximately 5-40 µm. It is further contemplated that the compositons may be combined in a variety of ways such as:
PAI + Graphite + Al-Pigments
PAI + Graphite + MoS₂ + Al-Pigments
PAI + PEEK + Graphite + WS₂
PAI + Graphite + MoS₂ + Zn-Phosphate.

The following Table illustrates five sample recipes of an anti-friction coating 50. These recipes described herein and without disclaiming any other illustrative embodiments or subject matter:

| **g per 100 g of material** | **1** | **2** | **3** | **4** | **5** | **Reference (Grafal 255)** |
|---|---|---|---|---|---|---|
| PAI (Poly-amide-imide) | 30-55 | 30-55 | 30-55 | 30-55 | 30-55 | 30-55 |
| Graphite | 15-20 | | | 5 | | 18-25 |
| Molybdenum disulfide | | 15-20 | 15-20 | 15 | | |
| SiC / B₄C / WC | 5-10 | 5-10 | 5-10 | | 5 | |
| Aluminum oxide / Nickel | | | 5 | 10 | 10 | |
| Hexagonal boron nitride (hBN) | | | | | 15-20 | |
| Zinc phosphate | | 5-10 | 5-10 | | | |
| NEP (N-ethylpyrrolidone) (as solvent) | 40-45 | 40-45 | 40-45 | 40-45 | | 45-50 |

the appended claims, along with the full scope of equivalents to which such claims are entitled. It is anticipated and intended that future developments will occur in the arts discussed herein, and that the disclosed systems and methods will be incorporated into such future embodiments. In sum, it should be understood that the invention is capable of modification and variation and is limited only by the following claims.

All terms used in the claims are intended to be given their broadest reasonable constructions and their ordinary meanings as understood by those skilled in the art unless an explicit indication to the contrary in made herein. In particular, use of the singular articles such as "a," "the," "said," etc. should be read to recite one or more of the indicated elements unless a claim recites an explicit limitation to the contrary.

## Claims

1. A method of applying an anti-friction coating to a piston assembly, comprising:
applying an anti-friction coating to at least a portion of the surface area of a piston, said anti-friction coating comprising a binder matrix and a solid lubricant;
applying a localized curing energy to only a portion of said surface area, said localized curing energy comprising a first curing energy; and subjecting said piston to a second curing energy after applying said first curing energy.

2. The method of claim 1, wherein said first curing energy comprises one of infra-red radiation, ultra-violet radiation, and induction radiation.

3. The method of claim 1, wherein said second curing energy comprises hot air convection.

4. The method of claim 1, wherein said second curing energy comprises one of infra-red radiation, ultra-violet radiation, and inductive radiation.

5. The method of claim 1, wherein the binder matrix comprises a polymer matrix comprising one of polyamide-imide, polyetheretherketone, polyetherketone, polyetherketoneketone, polyaryletherketone and epoxy resin.

6. The method of claim 1, wherein said anti-friction coating further comprises metallic pigments.

7. The method of claim 6, wherein said metallic pigments react with said localized curing energy to generate regional curing thermal energy.

8. The method of claim 1, wherein said localized curing energy is applied utilizing a controlled beam.

9. The method of claim 1, wherein further comprising:
selecting at least one energy source from a plurality of curing energy sources to generate said localized curing energy.

10. The method of claim 1, wherein said anti-friction coating further comprises hard particles comprising one of tungsten carbide, silicon carbide, silicon nitride, boron carbide, cubic boron nitride, aluminum oxide, titanium dioxide and titanium nitride.

11. The method of claim 1, wherein said anti-friction coating further comprises at least one reactive component.

12. The method of claim 1, wherein said localized curing energy is applied in a plurality of temperature-time steps.

## Patentansprüche

1. Ein Verfahren zum Auftragen von einer Gleitbeschichtung auf eine Kolbenanordnung, umfassend:
Auftragen von einer Gleitbeschichtung auf mindestens einem Teil von dem Bereich einer Oberfläche von einem Kolben, besagte Gleitbeschichtung umfassend eine Bindemittelmatrix und einen Festschmierstoff;
Auftragen von einer lokalen Härtungsenergie auf lediglich einen Teil von besagtem Bereich einer Oberfläche, besagte lokale Härtungsenergie umfassend eine erste Härtungsenergie; und Unterwerfen von besagtem Kolben zu einer zweiten Härtungsenergie, nachdem besagte erste Härtungsenergie aufgetragen wird.

2. Das Verfahren gemäß Anspruch 1, wobei besagte erste Härtungsenergie umfasst eine von Infrarotstrahlung, ultravioletter Strahlung und Induktionsstrahlung.

3. Das Verfahren gemäß Anspruch 1, wobei besagte zweite Härtungs- energie Heißluft umfasst.

4. Das Verfahren gemäß Anspruch 1, wobei besagte zweite Härtungsenergie umfasst eine von Infrarotstrahlung, ultravioletter Strahlung und Induktionsstrahlung.

5. Das Verfahren gemäß Anspruch 1, wobei die Bindemittelmatrix eine Polymermatrix umfasst, umfassend eine von Polyamid - Imid, Polyetheretherketon, Polyetherketon, Polyetherketonketon, Polyaryletherketon und Epoxidharz.

6. Das Verfahren gemäß Anspruch 1, wobei die Gleitbeschichtung des Weiteren metallische Pigmente umfasst.

7. Das Verfahren gemäß Anspruch 6, wobei besagte Metallpigmente mit der besagten lokalen Härtungsenergie reagieren, um regional thermische Härtungsenergie zu erzeugen.

8. Das Verfahren gemäß Anspruch 1, wobei besagte lokale Härtungsenergie aufgetragen wird, unter Verwendung von einem gesteuerten Strahl.

9. Das Verfahren gemäß Anspruch 1, wobei des Weiteren umfassend:
Auswählen von zumindest einer Energiequelle aus einer Mehrzahl von Härtungsenergiequellen, um besagte lokale Härtungsenergie zu erzeugen.

10. Das Verfahren gemäß Anspruch 1, wobei die Gleitbeschichtung des Weiteren Hartpartikel umfasst, umfassend eine von Wolframcarbid, Siliziumcarbid, Siliziumnitrid, Borcarbid, kubisches Bornitrid, Aluminiumoxid, Titandioxid und Titannitrid.

11. Das Verfahren gemäß Anspruch 1, wobei besagte Gleitbeschichtung des Weiteren zumindest eine reaktive Komponente umfasst.

12. Das Verfahren gemäß Anspruch 1, wobei die lokale Härtungsenergie in einer Vielzahl von Temperatur - Zeit - Stufen aufgetragen wird.

## Revendications

1. Procédé d'application d'un revêtement antifriction sur un ensemble piston, comprenant :
l'application d'un revêtement antifriction sur au moins une partie de la surface d'un piston, ledit revêtement antifriction comprenant une matrice de liant et un lubrifiant solide ;
l'application d'une énergie de durcissement localisée sur seulement une partie de ladite surface, ladite énergie de durcissement localisée comprenant une première énergie de durcissement; et le fait de soumettre ledit piston à une seconde énergie de durcissement après l'application de ladite première énergie de durcissement.

2. Procédé selon la revendication 1, dans lequel ladite première énergie de durcissement comprend un parmi un rayonnement infrarouge, un rayonnement ultraviolet, et un rayonnement à induction.

3. Procédé selon la revendication 1, dans lequel ladite seconde énergie de durcissement comprend une convection d'air chaud.

4. Procédé selon la revendication 1, dans lequel ladite seconde énergie de durcissement comprend un parmi un rayonnement infrarouge, un rayonnement ultraviolet, et un rayonnement inductif.

5. Procédé selon la revendication 1, dans lequel la matrice de liant comprend une matrice polymère comprenant un parmi un polyamide-imide, une polyétheréthercétone, une polyéthercétone, une polyéthercétonecétone, une polyaryléthercétone et une résine époxy.

6. Procédé selon la revendication 1, dans lequel ledit revêtement antifriction comprend en outre des pigments métalliques.

7. Procédé selon la revendication 6, dans lequel lesdits pigments métalliques réagissent avec ladite énergie de durcissement localisée pour générer de l'énergie thermique de durcissement régionale.

8. Procédé selon la revendication 1, dans lequel ladite énergie de durcissement localisée est appliquée en utilisant un faisceau contrôlé.

9. Procédé selon la revendication 1, comprenant en outre :
la sélection d'au moins une source d'énergie à partir d'une pluralité de sources d'énergie de durcissement pour générer ladite énergie de durcissement localisée.

10. Procédé selon la revendication 1, dans lequel ledit revêtement antifriction comprend en outre des particules dures comprenant un parmi un carbure de tungstène, un carbure de silicium, un nitrure de silicium, un carbure de bore, un nitrure de bore cubique, un oxyde d'aluminium, un dioxyde de titane et un nitrure de titane.

11. Procédé selon la revendication 1, dans lequel ledit revêtement antifriction comprend en outre au moins un constituant réactif.

12. Procédé selon la revendication 1, dans lequel ladite énergie de durcissement localisée est appliquée dans une pluralité d'étapes temporelles de température.
